# EUROPEAN PATENT SPECIFICATION

(11) **EP 4 017 891 B1**
(45) Date of publication and mention of the grant of the patent: **12.07.2023**
(21) Application number: 20751572.7
(22) Date of filing: 11.08.2020
(51) Int. Cl.: C08G 18/32, C08G 18/66, C08L 75/04, C08G 18/30, C08G 18/42, C08G 18/48, C08G 18/76, C08L 23/08, C08G 101/00

(54) **A PREPARATION COMPRISING THERMOPLASTIC POLYISOCYANATE POLYADDITION PRODUCT, A PROCESS FOR PREPARING THE SAME AND THE USE THEREOF**
PRÄPARAT MIT THERMOPLASTISCHEM POLYISOCYANATPOLYADDITIONSPRODUKT, VERFAHREN ZUR HERSTELLUNG DAVON UND VERWENDUNG DAVON
PRÉPARATION COMPRENANT UN PRODUIT DE POLYADDITION DE POLYISOCYANATE THERMOPLASTIQUE, SON PROCÉDÉ DE PRÉPARATION ET SON UTILISATION

(30) Priority: 21.08.2019 EP 19192845; 11.09.2019 EP 19196739
(43) Date of publication of application: 29.06.2022
(73) Proprietor: BASF SE, 67056 Ludwigshafen am Rhein (DE)
(72) Inventor: DRAWE, Patrick, 49448 Lemfoerde (DE); RICHTER, Sebastian, Shanghai, 200137 (CN)
(74) Representative: BASF IP Association
(86) International application number: PCT/EP2020/072448
(87) International publication number: WO 2021/032528

(56) References cited:
- CA-A1- 2 133 239
- US-A1- 2012 245 286
- US-A1- 2019 071 535

## Description

The present invention is directed to a preparation comprising a thermoplastic polyisocyanate polyaddition product, also referred to as TPPP, a process for preparing the same and the use thereof.

### Background of the invention

TPPP is a reaction product of suitable amounts of the building components polyisocyanate and compounds reactive towards isocyanate.

Thermoplastic polyurethane urea, also referred to as TPU-U, has been described in US 4,286,080, US 5,688,863 and US 5,739,250. These TPU-U are prepared by reacting polyol, diisocyanate and water using reaction extrusion process.

The presence of water in these TPU-U renders the production process unsatisfactory in terms of foaming, which renders it difficult to handle the process on an industrial scale. Accordingly, these techniques do not provide a stable and reproducible process without compromising on the mechanical properties and heat resistance of the finished TPPP. CA 2 133 239 A1 discloses a polyoxyalkylene emulsifier in the production of thermoplastic polyurethane-urea.

Thus, it was an objective of the invention to find an alternative production process for a preparation comprising TPPP by reducing the troublesome foaming, thereby resulting in a stable and reproducible high quality TPPP preparation, at the same time with acceptable mechanical properties and good heat resistance.

### Summary of the invention

Surprisingly, it has been found that this objective could be achieved by using a defoamer comprising polyalphaolefin in the production process of a preparation comprising thermoplastic polyaddition product, also referred to as TPPP.

Accordingly, in embodiment 1, the present invention is directed to a preparation comprising a thermoplastic polyisocyanate polyaddition product (TPPP), wherein the thermoplastic polyisocyanate polyaddition product (TPPP) is obtained by reacting:
(a) a diisocyanate and
(b) a compound reactive with isocyanate with a functionality between 1.8 and 2.6 and
(c) water
   in the presence of
(d) a defoamer wherein the defoamer comprises a polyalphaolefin.

Some of the advantages of embodiment 1 which are even more distinct in the further embodiments as outlined below, is reduced foaming, which results in a stable and reproducible high quality TPPP with good mechanical properties, especially in terms of compression set, abrasion, and rebound. Other important properties are cold flexibility and very good heat resistance.

Another aspect of this invention are foam beads based on the preparation comprising TPPP, preferably TPU-U.

Another aspect of the present invention is directed to a process for preparing the product, also referred to as preparation, described herein.

Still another aspect of the present invention is directed to the use of the product, also referred to as preparation, described herein, in an article.

Yet another aspect of the present invention is directed to an article comprising the product, respectively the preparation, described herein.

Figures:

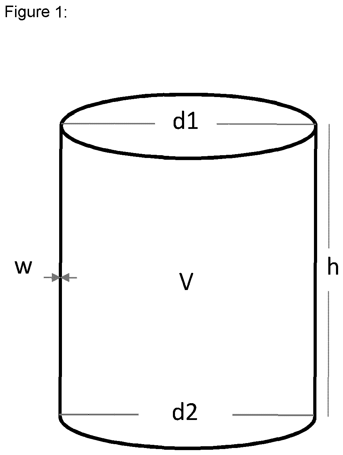

Figure 1 shows the dimensions of the metal can, used for determining the performance of the defoamer as outlined in the Examples. The can has a conic form. The diameter of the top (d1) is 163 mm, the diameter at the bottom (d2) id 155 mm, the height (h) is 180 mm, resulting in a volume (V) of 3.3 L. The material of the can used in the experiments was aluminium with a wall thickness (w) of about 0.6 mm.

### Detailed description

TPPP is the reaction product of a diisocyanate and a compound reactive towards isocyanate.

Preferred compounds reactive towards isocyanate are compounds with a molecular weight of 500 g/Mol or more. Compounds reactive towards isocyanate with a molecular weight between 49 g/Mol to 499 g/Mol are referred to as chain extender. Water is another compound reactive towards isocyanate leading to urea units and therefore is referred to separately. The isocyanate and the compounds reactive towards isocyanate are also referred to as building components of the thermoplastic polyurethane polyaddition product (TPPP), preferably the thermoplastic polyurethane urea (TPU-U).

Non-building components, also referred to as ingredients, refer to the defoamer, and optionally catalyst, auxiliary substance material and/or added substance materials, also referred to as additives.

### Chain extender

In a preferred embodiment 2, comprising all features of embodiment 1 small amounts of suitable chain extenders are added as one building component in the preparation comprising TPPP. This would not affect the desired properties. Small amount is any amount which is higher than 0 wt.-% and below 2 wt.-% referring to the total weight of the TPPP, preferably TPU-U. In another preferred embodiment the amount of more preferably higher than 0 wt-% and below 1 wt.-%, more preferred higher than 0 wt.-% and below 0,1 wt-%, referring to the total weight of the TPPP, preferably TPU-U.

The chain extender is preferably aliphatic, araliphatic, aromatic and/or cycloaliphatic compounds with a molecular weight of 0.05 × 10³ g/Mol to 0.499 × 10³ g/Mol, preferably with 2 groups reactive with isocyanate, which are also referred to as functional groups (functionality of 2). The chain extender is either a single chain extender or a mixture of at least two chain extenders.

The chain extender is preferably a difunctional compound, preferred examples being diamines or alkanediols having 2 to 10 carbon atoms in the alkylene radical.

In a preferred embodiment the chain extender (CE) is selected from the group consisting of 1,2-ethylene glycol, 1,2-propanediol, 1,3-propanediol, 1,4-butanediol, 2,3-butanediol, 1,5-pentanediol, 1,6-hexanediol, diethylene glycol, dipropylene glycol, 1,4-cyclohexanediol, 1,4-dimethanol cyclohexane, neopentylglycol and hydroquinone bis (beta-hydroxyethyl) ether (HQEE), or is a mixture thereof.

Preferably the chain extender selected from the group consisting of 1,2-ethylene glycol, 1,3-propanediol, 1,4-butanediol, and 1,6-hexanediol, di-, tri-, tetra-, penta-, hexa-, hepta-, okta-, nona-and/or deca alkylene glycole, preferably respective oligo- and/or polypropylene glycole, or is a mixture thereof.

Particularly preferred chain extenders are ethanediol, 1,3-propanediol, 1,4-butanediol, and 1,6-hexanediol. In one preferred embodiment the chain extender is 1,3 propandiol.

### Water

In another preferred embodiment 3 the preparation comprising TPPP according to embodiment 1 or 2, or its preferred embodiments, does not contain a chain extender. The hard segments are built from diisocyanate and water only. The soft segment is the polyol. This TPPP is a thermoplastic polyurethane urea, also referred to as TPU-U.

TPU-U are especially desired since TPU-U allows to produce materials with a higher thermal stability using the same polyol as in a comparable thermoplastic polyurethane (TPU) without further additives.

In another preferred embodiment 4, the preparation comprises TPPP, preferably TPU-U which is obtained by reacting the building components:
(a) diisocyanate
(b) compound reactive towards isocyanate with a functionality between 1.8 and 2.6 and
(c) water,
   in the presence of
(d) a defoamer, comprising a polyalphaolefin, preferably wherein the preparation does not comprise a chain extender.

Preferably the amount of water is in between 0.1 wt.-% to 3.0 wt.-% based on the total weight of the building components. Preferably, it is in between 0.1 wt.-% to 2.8 wt.-%, preferably in between 0.15 wt.-% to 2.8 wt.-%, preferably in between 0.2 wt.-% to 2.8 wt.-%. More preferably, it is in between 0.2 wt.-% to 2.5 wt.-%, more preferably in between 0.25 wt.-% to 2.5 wt.-%, more preferably in between 0.3 wt.-% to 2.5 wt.-%. Most preferably, it is in between 0.3 wt.-% to 2.2 wt.-%, or most preferably in between 0.35 wt.-% to 2.2 wt.-%, or most preferably in between 0.4 wt.-% to 2.2 wt.-%. In a particularly preferred embodiment, it is in between 0.4 wt.-% to 2.0 wt.-% based on the total weight of the building components.

In a preferred embodiment 5 the preparation comprising all features of any of the embodiments 1 to 4, or their preferred embodiments, the defoamer comprises or is a polyalphaolefin. Poly-alpha-olefin (poly-α-olefin, PAO) is a polymer made by polymerizing an alpha-olefin. An alpha-olefin or α-olefin is an alkene where the carbon-carbon double bond starts at the α-carbon atom, i.e. the double bond is between the number 1 and number 2 carbon in the molecule.

In a preferred embodiment 6, the preparation comprising all features of the embodiments 5, or its preferred embodiments, the polyalphaolefin is the reaction product of an 1-alkene comprising 2 to 14 carbon atoms, even more preferred the reaction product of one of the 1-alkenes, selected from the group of 1-hexene, 1-octene, 1-decene, 1-dodecene, 1-tetradecene, or is a mixture thereof, even more preferably the 1-alkene is 1-decene.

These monomers are commercially available and have the following CAS-No.1-hexene: 592-41-6, 1-octene: 111-66-0, 1-decene: 872-05-9, 1-dodecene: 112-41-4, 1-tetradecene: 1120-36-1

In a preferred embodiment 7, the preparation comprising all features of the embodiments 5 or 6, or its preferred embodiments, the polyalphaolefine comprises a mixture of oligomere of 1-decene, such as dimers, trimers, tetramers etc. (CAS-No. 68037-01-4). Whereas, due to the production process molecules with less carbon atoms such as ethylene, propylene and/or 1-butene may be comprised in those oligomers.

In preferred embodiments the poly-alpha-olefines (PAO) is branched, in other preferred embodiments the PAO is linear.

In other preferred embodiments the dispersity of the PAO is between 1 and 3, more preferably between 1 and 2 and even more preferred between 1,2 and 1,4, most preferred 1,3. In a preferred embodiment the dispersity is determined by gel permeation chromatography (GPC) according to DIN 55672-1 : 2016(against poly sytrene (PS) provided by Polymer Laboratories; solution in tetrahydrofurane (THF).

In preferred embodiment 8 the preparation according to one of the embodiments 5 to 7, or their preferred embodiments, comprises the poly-alpha-olefine with 0.5 wt% to 3 wt% referring to the whole amount of the preparation.

In a preferred embodiment 9 of the preparation according to one of the embodiments 5 to 8, or their preferred embodiments, the polyalphaolefin has a number average molecular weight from 4.0 × 10² g/Mol to 1.5× 10⁴ g/Mol, preferably from 1.0 × 10³ g/Mol to 8.0 × 10³ g/Mol, more preferably from 2 × 10³ g/Mol to 4.0 × 10³ g/Mol, most preferably from 2.6 × 10³ g/Mol to 3.0 × 10³ g/Mol. The molecular weight in this context is determined by gel permeation chromatography, preferably it is determined according to DIN 55672-1: 2016 (against poly sytrene (PS) provided by Polymer Laboratories; solution in tetrahydrofurane (THF).

Preferably the thermoplastic polyisocyanate polyaddition product (TPPP), preferably the thermoplastic polyurethane urea (TPU-U), is prepared by reacting (a) a diisocyanate, with (b) a compound reactive with isocyanate with a functionality between 1.8 and 2.6, in a preferred embodiment a polyol, preferably having two functional groups reactive with isocyanate, preferably having a number average molecular weight of 500 g /Mol to 100 × 10³ g /Mol and, if desired, (c) a chain extender preferably having a molecular weight of from 0.05 × 10³ g /Mol to 0.499 g/Mol and water, in the presence of the defoamer, if desired, further in the presence of (d) a catalyst and/or (e) an auxiliary and/or an additive.

The components (a) diisocyanate (b) compound reactive with isocyanate, in a preferred embodiment polyol and (c) chain extenders, respectively water, are also addressed individually or together as structural components or build-up components. The build-up components including the catalyst and/or the auxiliary and/or the additive are also called input materials.

In order to adjust the hardness and melt index of the TPPP, preferably TPU-U, the molar ratios of the quantities of the build-up components used can be varied, whereby the hardness and melt viscosity increase with increasing content of chain extender (c) respectively water, while the melt flow index decreases.

For the production of soft polyisocyanate polyaddition product TPPP, preferably thermoplastic polyurethane urea (TPU-U), preferably those having a Shore A hardness of less than 90, preferably from 90 to 70 Shore A, the essentially difunctional polyols (b) may also be referred to as polyhydroxyl compounds (b) and, if used, the chain extenders (c) and the water may advantageously be used in mole ratios of 0.3 to 2 (water) or 1:1 to 1:5 (c), preferably 0.5 to 1.5 (water) or 1:1.5 to 1:4.5 (c), such that the resulting mixtures of the structural components (b) and (c), respectively water, have a hydroxyl equivalent weight of greater than 170, and in particular from 230 to 450.

In order to prepare the thermoplastic polyisocyanate polyaddition product (TPPP), preferably the thermoplastic polyurethane urea (TPU-U), the building components (a), (b), in some preferred embodiment also the chain extender (c), are reacted in preferred embodiment in the presence of a catalyst (d) and optionally auxiliaries and/or additives (e) in such quantities that the equivalent ratio of NCO groups of the diisocyanates (a) to the sum of the hydroxyl groups of the components (b) and (c) is 0.95 to 1.10:1, preferably 0.98 to 1.08:1 and in particular approximately 1.0 to 1.05:1.

The number average molecular weight Mn in the context of this invention is determined by gel permeation chromatography, preferably it is determined according to DIN 55672-1. Isocyanate

The diisocyanate preferably is an organic isocyanate (a), preferably is an aliphatic, cycloaliphatic, araliphatic and/or aromatic diisocyanate The diisocyanate more preferably is selected from the group comprising tri-, tetra-, penta-, hexa-, hepta- and/or octamethylene diisocyanate, 2-methyl-pentamethylene 1,5-diisocyanate, 2-ethyl-butylene-1,4-diisocyanate, 1,5-pentamethylene diisocyanate, 1,4- butylene-diisocyanate, 1-isocyanato-3,3,5-trimethyl-5-isocyanatomethyl-cyclohexane (isophorone diisocyanate, IPDI), 1,4- bis(isocyanatomethyl)cyclohexane and/or 1,3-bis(isocyanatomethyl)cyclohexane (HXDI), 2,4-para-phenylene diisocyanate (PPDI), 2,4-tetramethylene xylene diisocyanate (TMXDI), 4,4'-, 2,4'-and 2,2'-dicyclohexylmethane diisocyanate (H12 MDI), 1,6-hexamethylene diisocyanate (HDI),1,4-cyclohexane diisocyanate, 1-methyl-2,4- and/or-2,6-cyclohexane diisocyanate, 2,2'-, 2,4'- and/or 4,4'-diphenylmethane diisocyanate (MDI), 1,5-naphthylene diisocyanate (NDI), 2,4-and/or 2,6-toluene diisocyanate (TDI), diisocyanate, 3,3'-dimethyl-diphenyl diisocyanate, 1,2-diphenylethane diisocyanate and/or phenylene diisocyanate, or is a mixture thereof.

In a preferred embodiment 10 of the preparation according to one of the embodiments 1 to 9 or their preferred embodiments, the diisocyanate is an aromatic diisocyanate, as outlined above, more preferably is selected from the group consisting of 2,4- and/or 2,6-toluene diisocyanate (TDI), 1,5-naphthylene diisocyanate (NDI), 2,2'-, 2,4'- and/or 4,4'-diphenylmethane diisocyanate (MDI), or is a mixture thereof. Most preferably the isocyanate is 2,2'-, 2,4'- and/or 4,4'-diphenylmethane diisocyanate (MDI).

### Polyol

The isocyanate-reactive compound (b) has a functionality between 1.8 and 2.6, preferred between 1.9 and 2.2 and especially preferred 2. Compounds (b) reactive towards isocyanates are preferably those having a molecular weight between 0.500 × 10³ g/Mol and 8 ×10³ g/Mol, preferably 0.7 × 10³ g/Mol to 6.0 × 10³ g/Mol, in particular 0.8 × 10³ g/Mol to 4.0 × 10³ g/Mol.

The isocyanate-reactive compound is essentially linear and is an isocyanate-reactive substance or a mixture of different substances, in which case the mixture meets the above requirement.

These long-chain compounds are used with a content of 1 equivalent Mol% to 80 equivalent Mol%, based on the isocyanate group content of the diisocyanate.

The isocyanate-reactive compound (b) preferably has a reactive group selected from the hydroxyl group, the amino group, the mercapto group or the carboxylic acid group. The preferred group is the hydroxyl group. These compounds are also referred to as polyols. The polyol (b) preferably is selected from the group consisting of polyesterols, polyetherols or polycarbonate diols, more preferred from the group consisting of polyether polyol and polycarbonate. Particularly preferred is polyether polyol. In yet another embodiment polyester polyol is preferred.

### Polyesterpolyol

Preferred polyols are selected from the following group: polypropiolactone, polybutyrolactone, polyvalerolactone, polycaprolactone, polyoxacyclododecan-2-one, copolyesters based on adipic acid, succinic acid, pentanedioic acid, sebacic acid or mixtures thereof and mixtures of 1,2-ethanediol and 1,4-butanediol, copolyesters based on adipic acid, succinic acid, pentanedioic acid, sebacic acid or mixtures thereof and mixtures of 1,4-butanediol and 1,6-hexanediol, polyesters based on adipic acid and 3-methyl-pentanediol-1,5 and/or polytetramethylene glycol (polytetrahydrofuran, PTHF), particularly preferably copolyester based on adipic acid and mixtures of 1,2-ethanediol and 1,4-butanediol or polyester based on adipic acid, succinic acid, pentanedioic acid, sebacic acid or mixtures thereof and polytetramethylene glycol (PTHF), or are mixtures thereof.

### Polyether polyol

Other preferred polyols are polyether polyols, preferably polyether diols, further preferred are those based on ethylene oxide, propylene oxide and/or butylene oxide.

Another preferred polyether is polytetrahydrofuran (PTHF). In a preferred embodiment the polytetrahydrofuran has a number average molecular weight between 0.6 × 10³ g/ Mol and 3 × 10³ g/ Mol. In one preferred embodiment the molecular weight of the PTHF is between 0.6 × 10³ g/ Mol and 0.7 × 10³ g/ Mol, most preferably 0.65 × 10³ g/Mol. In yet another preferred embodiment the number average molecular weight is between 0.9 × 10³ g/ Mol and 1.1 × 10³ g/ Mol, more preferably 1.0 × 10³ g/Mol, and in yet another embodiment the number average molecular weight is between 1.9 × 10³ g/Mol and 2.1 × 10³ g/Mol, more preferably is 2.0 × 10³ g/Mol. In preferred embodiment the PTHF is used with a specific molecular weight as outlined above. In other preferred embodiments the PTHF is a mixture of PTHF with different molecular weights, more preferably as given above. In one preferred embodiment the PTHF is a mixture of a PTHF with a number average molecular weight between 0.9 × 10³ g/ Mol and 1.1 × 10³ g/ Mol, more preferably 1.0 × 10³ g/ Mol and a PTHF with a number average molecular weight between 1.9 × 10³ g/Mol and 2.1 × 10³ g/Mol, more preferably 2.0 × 10³ g/Mol.

The number average molecular weight Mn in the context of this invention is preferably determined according to DIN 55672-1.

### Polyacarbonatediol

In another preferred embodiment the compounds (b) which is reactive towards isocyanates, is a polycarbonate diol, preferably an aliphatic polycarbonate diol. Preferred polycarbonate diols are, for example, polycarbonate diols based on alkanediols. Preferred polycarbonate diols are strictly difunctional OH-functional polycarbonate diols, preferably strictly difunctional OH-functional aliphatic polycarbonate diols. Preferred polycarbonate diols are based on butanediol, pentanediol or hexanediol, in particular 1,4-butanediol, 1,5-Pentanediol, 1,6-Hexanediol, 3-Methylpentane-(1,5)-diol, or are mixtures thereof, in particular preferably 1,4-butanediol, 1,5-pentanediol, 1,6-hexanediol, or mixtures thereof. Most preferred in the present invention are polycarbonate diols based on butanediol and hexanediol, polycarbonate diols based on pentanediol and hexanediol, polycarbonate diols based on hexanediol, and mixtures of two or more of these polycarbonate diols.

Preferably, the polycarbonate diols used have a number average molecular weight Mn in the range from 0.5 × 10³ to 4.0 × 10³ g/Mol, preferably in the range from 0.65 × 10³ g/ Mol to 3.5 × 10³ g/Mol, particularly preferred in the range from 0.8 × 10³ g/Mol to 3.0 × 10³ g/Mol, determined via GPC, most preferably 2.0 × 10³ g/Mol.

### Polysioloxanediol

In another preferred embodiment the polyol is a polysiloxane diol. The molecular weight is preferably between 0,500 × 10³ g/Mol and 15 × 10³ g/Mol, more preferred between 1,0 × 10³ g/Mol and 3,0 × 10³ g/Mol.

Preferably the oligo- or polysiloxane has the formula (I):

HO-[Ak-O]_{q}-Ak-Si(R₂)-[O-Si(R₂)]ₚ-O-Si(R₂)-Ak-[O-Ak]_{q'}-OH formula (I)

wherein Ak preferably represents C₂-C₄ alkylene, R represents C₁-C₄ alkyl, and each of p, q and q' independently is a number selected from the range of 0 to 50. In more preferred moieties (B) of formula (I), p ranges from 1 to 50, especially from 2 to 50.

In one preferred embodiment Ak represents identical alkylene units in each residue (C1), in yet another preferred embodiment Ak represents different alkylene units in the same residue (C1). In one preferred embodiment Ak is ethylene or propylene within the same residue (C1).

One preferred polydimethylsiloxane diol has formula (II) 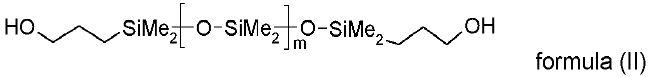
with m in the range from 5 to 80,
or has formula (III)

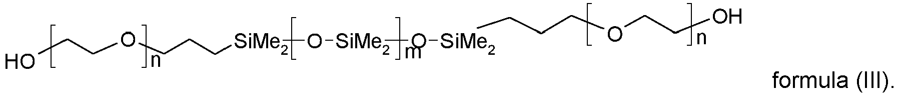

In a preferred embodiment 11 of the preparation according to embodiment 1 to 10 or its preferred embodiments, the compound reactive with isocyanate, does not comprise polysiloxane.

### Mixture of polyol

In one preferred embodiment the polyol is a mixture of two or more polyols.

In a case of using a mixture of polyether polyols and polycarbonate diols, polycarbonate diols are used in amount of less than 50 % by weight, preferably less than 35 % by weight, more preferably less than 15 % by weight, and most preferably less than 5 % by weight, based on the total weight of the polyol mixture.

In a preferred embodiment 12 of the preparation according to one of the embodiments 1 to 11 or their preferred embodiments the compound reactive with isocyanate is polyether polyol, more preferably it is polytetrahydrofuran (PTHF). The PTHF preferably has a number average molecular weight of 1 × 10³ g/Mol.

### Catalyst

In a preferred embodiment a catalyst (d) is used with the build-up components. This is in particular a catalyst which accelerates the reaction between the NCO groups of the isocyanate (a) and the isocyanate-reactive compound (b), preferably with hydroxyl groups and, if used, the chain extender (c), and water. The preferred catalyst is selected from the group consisting of KOH, tertiary amines, or are selected from group consisting of metal compounds, preferably titanium acid esters, iron compounds, preferably ferric acetylacetonate, tin compounds, preferably those of carboxylic acids, particularly preferred tin diacetate, tin dioctoate, tin dilaurate or tin dialkyl salts, further preferred dibutyltin diacetate, dibutyltin dilaurate, or from the group consisting of bismuth salts of carboxylic acids, preferably bismuth (III)neodecanoate, or is a mixture thereof.

A preferred catalyst is a tertiary amine, preferably selected from the group. consisting of N,N-bis[3-(dimethylamino)propyl]-N',N'-dimethylpropane-1,3-diamine, 1-[bis(3-(dimethylamino)propyl)amino]-2-propanol, N,N-bis-(2-hydroxy-propyl)-N',N'-dimethyl-propanediyldiamine, N'-[3-(di-methylamino)propyl]-N,N,N'-trimethylpropane-1,3-diamine, 2-[[3-(dimethylamino)propyl]methyla-mino] ethanol, 1-O-Dimethylaminoethyl-ethylenglykol, 2-((2-(2-(dimethylamino)ethoxy)ethyl)methyl-amino)-ethanol.

More preferred the catalyst is selected from N,N-bis[3-(dimethylamino)propyl]-N',N'-dimethylpropane-1,3-diamine or N'-[3-(dimethylamino)propyl]-N,N,N'-trimethylpropane-1,3-diamine, or is a mixture thereof. These catalysts are especially active.

Most preferred is N,N-bis[3-(dimethylamino)propyl]-N',N'-dimethylpropane-1,3-diamine, since this catalyst is very active and has low toxicity.

The catalyst (d) is preferably used in quantities of 0,0001 to 0,1 parts by weight per 100 parts by weight of the compound (b) reactive with isocyanates, more preferably in quantities of 0.005 to 0.05 parts by weight per 100 parts by weight, more preferably in quantities of 0.01 to 0.02 parts by weight per 100 parts by weight, most preferably in quantities of 0.015 parts per weight per 100 parts by weight of the compound (b) reactive with isocyanates

In yet another preferred embodiment no catalyst (d) is used with the build-up components.

### Auxiliary

In preferred embodiments an auxiliary or additive (e) is added to the building components (a) to (c). Preferred examples include surface-active substances, fillers, flame retardants, nucleating agents, oxidation stabilizers, lubricating and demolding aids, dyes and pigments, if necessary stabilizers, preferably against hydrolysis, light, heat or discoloration, inorganic and/or organic fillers, reinforcing agents and/or plasticizers.

Stabilizers in the sense of this invention are additives which protect a plastic or a plastic composition against harmful environmental influences. Preferred examples are primary and secondary antioxidants, sterically hindered phenols, hindered amine light stabilizers, UV absorbers, hydrolysis inhibitors, quenchers and flame retardants. Examples of commercial stabilizers are given in Plastics Additives Handbook, 5th Edition, H. Zweifel, ed., Hanser Publishers, Munich, 2001 ([1]), p.98-S 136.

In a preferred embodiment, the UV absorber has a number average molecular weight greater than 0.3 × 10³ g/Mol, in particular greater than 0.39 × 10³ g/Mol. Furthermore, the preferred UV absorber has a molecular weight not exceeding 5 × 10³ g/Mol, particularly preferred not exceeding 2 × 10³ g/Mol.

The UV absorber is preferably selected from the group consisting of cinnamates, oxanilides and benzotriazole, or is a mixture thereof, particularly suitable as UV absorbers is benzotriazole. Examples of particularly suitable UV-absorbers are Tinuvin^{®} 213, Tinuvin^{®} 234, Tinuvin^{®} 312, Tinuvin^{®} 571, Tinuvin^{®} 384 and Eversorb^{®} 82.

Preferably the UV absorbers is added in quantities of 0.01 wt.% to 5 wt.% based on the total weight of the compositon, preferably 0.1 wt.% to 2.0 wt.%, in particular 0.2 wt.% to 0.5 wt.%.

Often a UV stabilization based on an antioxidant and a UV absorber as described above is not sufficient to guarantee a good stability of the composition against the harmful influence of UV rays. In this case, in addition to the antioxidant and/or the UV absorber, or as single stabilizer, a hindered-amine light stabilizer (HALS) is be added to the composition.

Examples of commercially available HALS stabilizers can be found in Plastics Additive Handbook, 5th edition, H. Zweifel, Hanser Publishers, Munich, 2001, pp. 123-136.

Particularly preferred hindered amine light stabilizers are bis-(1,2,2,6,6-penta¬methylpiperidyl) sebacat (Tinuvin^{®} 765, Ciba Spezialitätenchemie AG) and the condensation product of 1-hydroxyethyl-2,2,6,6-tetramethyl-4-hydroxypiperidine and succinic acid (Tinuvin^{®} 622). In particular, the condensation product of 1-hydroxyethyl-2,2,6,6-tetramethyl-4-hydroxypiperidines and succinic acid (Tinuvin^{®} 622) is preferred, if the titanium content of the finished product is less than 150 ppm, preferably less than 50 ppm, in particular less than 10 ppm, based on the components used.

HALS compounds are preferably used in a concentration of from 0.01 wt.% to 5 wt.%, particularly preferably from 0.1 wt.% to 1 wt.%, in particular from 0.15 wt.% to 0.3 wt.%, based on the total weight of the composition.

A particularly preferred UV stabilization contains a mixture of a phenolic stabilizer, a benzotriazole and a HALS compound in the preferred amounts described above.

Further information on the above-mentioned auxiliaries and additives can be found in the technical literature, e.g. Plastics Additives Handbook, 5th edition, H. Zweifel, ed., Hanser Publishers, Munich, 2001.

In a preferred embodiment the TPPP, more preferably the TPU-U, is in the form of pellets or powder.

In one embodiment the TPPP, preferably TPU-U, is foamed, more preferred either pellets or powder of TPPP, preferably of TPU-U, is foamed. These foamed TPPP, preferably these TPU-U pellets or powder is also referred to as expanded TPPP particles, the preferred expanded TPU-U also as TPU-U particles, or shortly as eTPPP particles, respectively eTPU-U particles.

Suitable blowing agents are selected based on the method and the precise conditions and include, but are not limited to organic liquids or inorganic gases, or a mixture thereof. Liquids that can be used comprise halogenated hydrocarbons, or saturated, aliphatic hydrocarbons, in particular those having from 3 to 8 carbon atoms. Suitable inorganic gases are nitrogen, air, ammonia, or carbon dioxide. Further details can be found in, for e.g. WO2005/023920, WO2007/082838, WO2010/136398, WO2013/153190, WO2013/153190, WO2014/198779, WO2015/055811 WO2017/030835, US2017/0036377, US2016/0271847, US2016/0108198, WO2014/150119, WO2014/150124 and WO2016/131671.

### Preparation method (PPP)

Another aspect of this invention is a process for preparing a preparation according to one of the embodiments 1 to 12 or its preferred embodiments, which is embodiment 13.

The polyisocyanate polyaddition product, preferably the thermoplastic polyurethane urea (TPU-U) can be produced discontinuously or continuously according to the known processes, e.g. the reaction extruder process, the belt line process, the belt cast line process, or the hand cast process. In these processes either the "one shot" process or the prepolymer process is applied.

The building components (a), (b), and water, eventually the chain extender (c), and the defoamer are mixed with each other. This is done either in succession or simultaneously, in preferred embodiment in the presence of the catalyst (d) and/or auxiliary (e).

The mixing in the reaction extruder process is preferably at temperatures between 100°C and 280°C, preferably between 140°C and 250°C. The mixing in the belt line process is preferably at temperatures between 50 °C and 95 °C, more preferably between 50 °C and 85 °. This avoids evaporation of water.

In embodiment 14 the process according to precedent embodiment 13 is a reactive extrusion process, a belt line process, belt cast process, or a hand cast process, preferably a belt line or a belt cast process.

In embodiment 15 the process according to embodiments 13 or 14, or its preferred embodiments, comprises either the following steps:
(A1) mixing the compound reactive towards isocyanate with a functionality between 1.8 and 2.6 with the defoamer to obtain a pre-mixture, and
(A2) introducing the diisocyanate to the pre-mixture, preferably at a temperature in the range of ≥ 50°C to ≤ 150°C to obtain a reaction mixture.
   or
all reaction components are mixed simultaneously.

Steps (A1) and (A2) are also referred to as prepolymer process. The molecular ratio of the isocyanate and the compound reactive with isocyanate preferably is between 2 : 1 and 1:1. This has the advantage that the handling of the isocyanate in form of the prepolymer is much easier. In addition, the viscosity can be adjusted according to the requirements in the system.

In another preferred embodiment the molecular ratio of the isocyanate and the compound reactive with isocyanate is between 0.1 : 1 and 1 : 1, or in another preferred embodiment between 0.5 : 1 and 1:1. This also allows to adjust the viscosity as required.

In a step (A3) water, additional compound reactive towards isocyanate with a functionality between 1.8 and 2.6 is added to the reaction mixture to build up the thermoplastic polyaddition product (TPPP). In some preferred embodiments chain extender is added in addition, in other preferred embodiments beside the compound reactive toward isocyanate with a functionality between 1.8 and 2.6 only water is be added to the reaction mixture as building component.

In embodiment 16 in the process according to embodiment 15 all reaction components are mixed simultaneously. This process is especially preferable for the cast belt line, belt line process and the reaction extruding process, or the hand cast process.

The hand cast process, the belt line process and the belt cast line process are preferred, since they allow a much easier degassing of the carbon dioxide (CO₂) compared to the extrusion process. Moreover, with the use of the defoamer according to the invention the degassing is much more effective.

### Use

In a preferred embodiment 17 the preparation according to one of embodiments 1 to 12 or its preferred embodiment, respectively obtained by the process according to claims 13 to 16 or their preferred embodiments, is in the form of a pellet or a powder. The pellet or powder in a preferred embodiment is a compact material. In another preferred embodiment the pellet is expanded material, also referred to as foamed beads.

Another aspect of this invention and embodiment 18 is a foamed bead made of the preparation according to one of claims 1 to 12 or its preferred embodiments or as obtained according to one of embodiments 13 to 16 or its preferred embodiments.

These foamed beads and also molded bodies produced therefrom may be used in various applications (see e.g. WO 94/20568, WO 2007/082838 A1, WO2017030835, WO 2013/153190 A1, WO2010010010).

Another aspect of the invention and embodiment 19 is the use of the preparation according to one of embodiments 1 to 12 or its preferred embodiments, or as obtained according to the process according to one of embodiments 13 to 16 or its preferred embodiments for producing an article. The production of these articles is preferably done by injection moulding, calendering, powder sintering or extrusion.

Yet another aspect of the invention is the article produced with a preparation according to one of embodiments 1 to 12 or its preferred embodiment, or as obtained by the process according to one of embodiments 13 to 16 or its preferred embodiments.

The article in further preferred embodiments is selected from, coating, damping element, bellows, foil, fibre, moulded body, flooring for buildings and transport, non woven fabric, gasket, roll, shoe sole, hose, cable, cable connector, cable sheathing, pillow, laminate, profile, strap, saddle, foam, by additional foaming of the preparation, plug connection, trailing cable, solar module, lining in automobiles, wiper blade, elevator load bearing members, roping arrangements, drive belts for machines, preferably passenger conveyer, handrails for passenger conveyers modifier for thermoplastic materials, which means substance that influences the properties of another material. Each of these articles itself is a preferred embodiment, also referred to as an application.

### EXAMPLES

### 1. Example -Raw materials

| | |
|---|---|
| Polyol 1: | Polyetherpolyol based on Tetramethylene oxide comprising an OH-number of 114 and only primary OH-functionalities (functionality: 2) |
| Polyol 2: | Polyesterpolyol based on adipinic acid, 1,4-butanediol, 1,6-hexanediol comprising an OH-number of 55,5 to 56,2 (functionality: 2) |
| Polyol 3: | Polyesterpolyol based on epsilon-caprolactone comprising an OH-number of 55,5 (functionality: 2) |
| Isocyanate 1: | Aromatic Diisocyanat (4,4'-Methylendiphenyldiisocyanat) |
| Chain extender (CE) 1: | 1,4-Butanediol |
| H2O | Water |
| Defoamer 1 (D1): | Polyalphaolefines comprising of 1-Alkenes with 2 (Ethylene) to 14 (1-Tetradecene) carbon atoms, molecular weight in between 400 g/Mol and 15000 g/Mol with a number average molecular weight of 2200 g/Mol and a dispersity of 1,3. Available e.g. as BYK^{®}-1790 from BYK, USA |
| Defoamer 2 (D2) | Emulsion of aliphatic hydroxy compounds, rape oil, paraffin waxes in water. Available e.g. as Afranil NC from BASF, Germany |
| Defoamer 3 (D3) | Mixture of foam-destroying poly siloxanes and hydrophobic solids in polyglycol. Available e.g. as BYK^{®}-093 from BYK, USA |
| Defoamer 4 (D4) | Polyol alkoxylate, EO-PO block copolymer, non-ionic. Available e.g. as Sokalan AF from BASF, Germany |
| Defoamer 5 (D5) | Ethoxylated propoxylated fatty alcohols, non-ionic. Available e.g. as Plurafac LF 1300 from BASF, Germany |

### 2. Example - Selection of appropriate defoamer

Thermoplastic polyurethane urea (TPU-U) was synthesized by reacting methylene diphenyl diisocyanate (Lupranat MET, 461.69 g), deionized water (14.86 g) and respective polyol in the presence of a defoamer according to the recipe as outlined in Table 2.

The polyol was preheated in the metal can according to Figure 1 to 90 °C in an oven. First, the metal can was removed from the oven and placed under a stirrer. Secondly, the deionized water and the respective defoamer were added subsequently and the resulting mixture was allowed to cool down to 80°C under continuous stirring. Methylene diphenyl diisocyanate was preheated in an oven to 52 °C (T_{MDI} = 52 °C) and then added to the defoamer, polyol and water in the can (reaction mixture) at 80 °C, starting the reaction to synthesize TPU-U. The temperature of the reaction mixture and the reaction time were recorded until either the reaction mixture reached 105 °C (to avoid the gelling of the TPU-U in the metal can) or the height of the emerging foam reached the top of the metal can. Then, the reaction mixture was poured on a Teflon tub on a heat plate of 125 °C to allow the reaction to complete. After 10 minutes after addition of the isocyanate the resulting TPU-U slab was placed in an oven at 80 °C for 15 h. Finally, the TPU-U was grinded and reshaped into 2 mm and 6 mm thick test plates. S2-test bars (DIN 53504) were punched out of the test plates and used for mechanical testing. The temperature of the melt during the production of the test plates must not exceed 250 °C.

A defoamer is suitable to be used in TPU-U belt line production if the reaction mixture in the above described procedure reached at least 100 °C before the foam level reached the top of the metal can (indicated as maximum reaction temperature in the following table) and the reaction time is in between 60 s to 120 s until the reaction mixture must be poured on the heating plate (indicated as maximum reaction time in the following table). Both parameters are very important to guarantee a sufficient reactivity and average residence time in the mixing pod in the production process of the beltline process.

**Table 1 - Defoamer-Test results**

| | | Polyol 1 based Polyurea-urethane | | Polyol 2 base Polyurea-urethane | |
|---|---|---|---|---|---|
| Defoamer | Wt.% | Maximum reaction temperature /°C | Maximum reaction time/s | Maximum reaction temperature /°C | Maximum reaction time/s |
| D1 | 0.60 | 105 | 63 | 103 | 114 |
| D1 | 1.00 | 110 | 78 | 103 | 105 |
| D2 | 0.60 | 81 | 12 | 86 | 65 |
| D2 | 1.00 | 81 | 11 | 85 | 52 |
| D3 | 0.60 | 87 | 25 | 101 | 193 |
| D3 | 1.00 | 84 | 21 | 103 | 193 |
| D4 | 0.60 | 91 | 37 | 86 | 67 |
| D4 | 1.0 | 90 | 31 | 85 | 54 |
| D5 | 0.60 | 90 | 31 | 85 | 75 |
| D5 | 1.0 | 89 | 29 | 86 | 73 |

### 3. Example - Synthesis of thermoplastic polyurethane and thermoplastic polyurethane urea

The polyol was preheated in the metal can according to Figure 1 to 90 °C in an oven. First, the metal can was removed from the oven and placed under a stirrer. Secondly, the deionized water and the respective defoamer were added subsequently and the resulting mixture was allowed to cool down to 80°C under continuous stirring. Methylene diphenyl diisocyanate was preheated in an oven to 52 °C (T_{MDI} = 52 °C) and then added to the defoamer, polyol and water in the can (reaction mixture) at 80 °C, starting the reaction to synthesize TPU-U. The temperature of the reaction mixture and the reaction time were recorded until either the reaction mixture reached 105 °C (to avoid the gelling of the TPU-U in the metal can) or the height of the emerging foam reached the top of the metal can. Then, the reaction mixture was poured on a Teflon tub on a heat plate of 125 °C to allow the reaction to complete. After 10 minutes after addition of the isocyanate the resulting TPU-U slab was placed in an oven at 80 °C for 15 h. Finally, the TPU-U was grinded and reshaped into 2 mm and 6 mm thick test plates. S2-test bars (DIN 53504) were punched out of the test plates and used for mechanical testing. The temperature of the melt during the production of the test plates must not exceed 250 °C.

**Table 2 - Composition of samples (SP):**

| SP. | Isocyanate1 | Polyol1 | Polyol2 | Polyol3 | CE 1 | H2O | D1 |
|---|---|---|---|---|---|---|---|
| 1 | 393,15g | 1100g | - | - | 40,61g | - | - |
| 2 | 459,48g | 1100g | - | - | 64,50g | - | - |
| 3 | 485,55g | 1000g | - | - | 83,06g | - | - |
| 4 | 421,84g | 1100g | - | - | - | 10,28g | 11,58g |
| 5 | 462,68g | 1100g | - | - | - | 13,22g | 11,91g |
| 6 | 459,93g | 1000g | - | - | - | 14,84g | 11,14g |
| 7 | 501,62g | 1000g | - | - | - | 17,84g | 11,48g |
| 8 | 545,92g | 1000g | - | - | - | 21,03g | 11,84g |
| 9 | 421,84g | 1100g | - | - | - | 10,28g | 23,33g |
| 10 | 462,68g | 1100g | - | - | - | 13,22g | 24,00g |
| 11 | 459,93g | 1000g | - | - | - | 14,84g | 22,46g |
| 12 | 501,62g | 1000g | - | - | - | 17,84g | 23,14g |
| 13 | 545,92g | 1000g | - | - | - | 21,03g | 23,86g |
| 14 | 459,93g | 1000g | - | - | - | 14,84g | 14,90g |
| 15 | 459,93g | 1000g | - | - | - | 14,84g | 30,10g |
| 16 | 459,93g | 1000g | - | - | - | 14,84g | 45,61g |
| 17 | 459,93g | 1000g | - | - | - | 14,84g | 61,45g |
| 18 | 330,85g | - | 1200g | - | 63,07g | - | - |
| 19 | 370,18g | - | 1100g | - | 81,90g | - | - |
| 20 | 355,09g | - | 1150g | - | - | 15,30g | 11,38g |
| 21 | 425,96g | - | 1100g | - | - | 20,76 | 11,79g |
| 22 | 333,80g | - | - | 1200g | 90,12 | - | - |
| 23 | 355,09g | - | - | 1150g | - | 15,30g | 11,38g |

### 4. Example - Test methods and Results

Test plates of the samples were made by injection molding and then tempered at 100 °C for 20 h prior to mechanical testing.

| | |
|---|---|
| ShoreA Hardness: | DIN ISO 7619-1 : 2012 |
| ShoreD Hardness: | DIN ISO 7619-1 : 2012 |
| Tensile test: | DIN 53 504 : 2017 |
| Tear strength test: | DIN ISO 34-1, B : 2016 |
| Abrasion: | DIN ISO 4649 : 2014 |
| Compression set: | DIN ISO 815 : 2016 |
| D1 molar mass and number average molecular weight (Mn): | DIN 55672-1 : 2016 (against polystyrene (PS) provided by Polymer Laboratories (M = 162 g/Mol to M = 50400 g/Mol); Solution in tetrahydrofuran (THF)) |

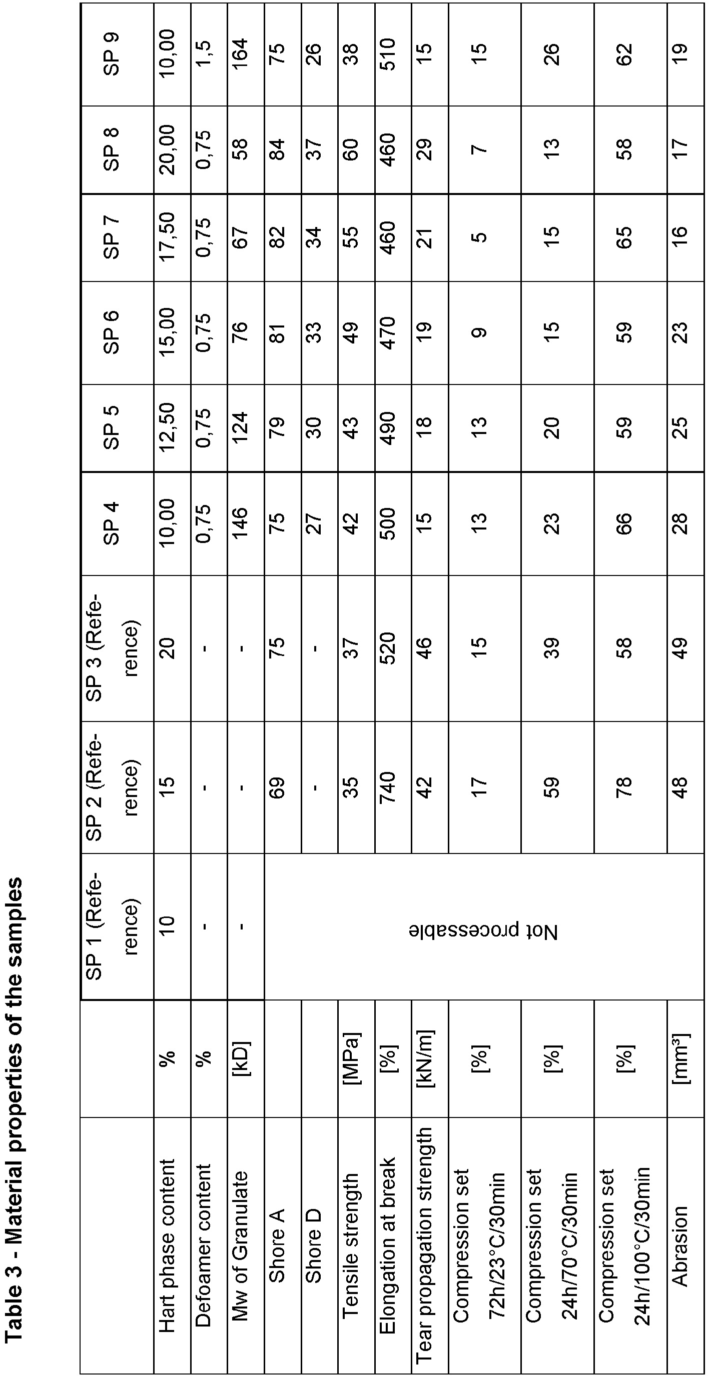

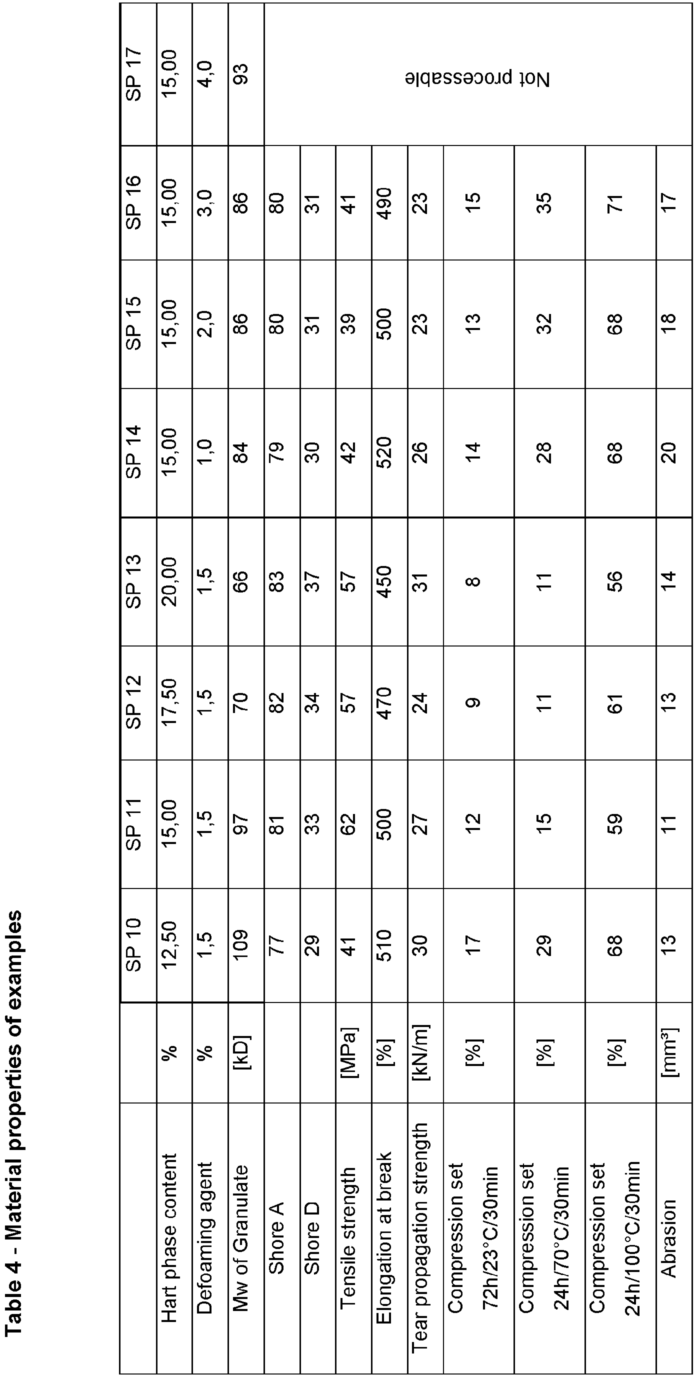

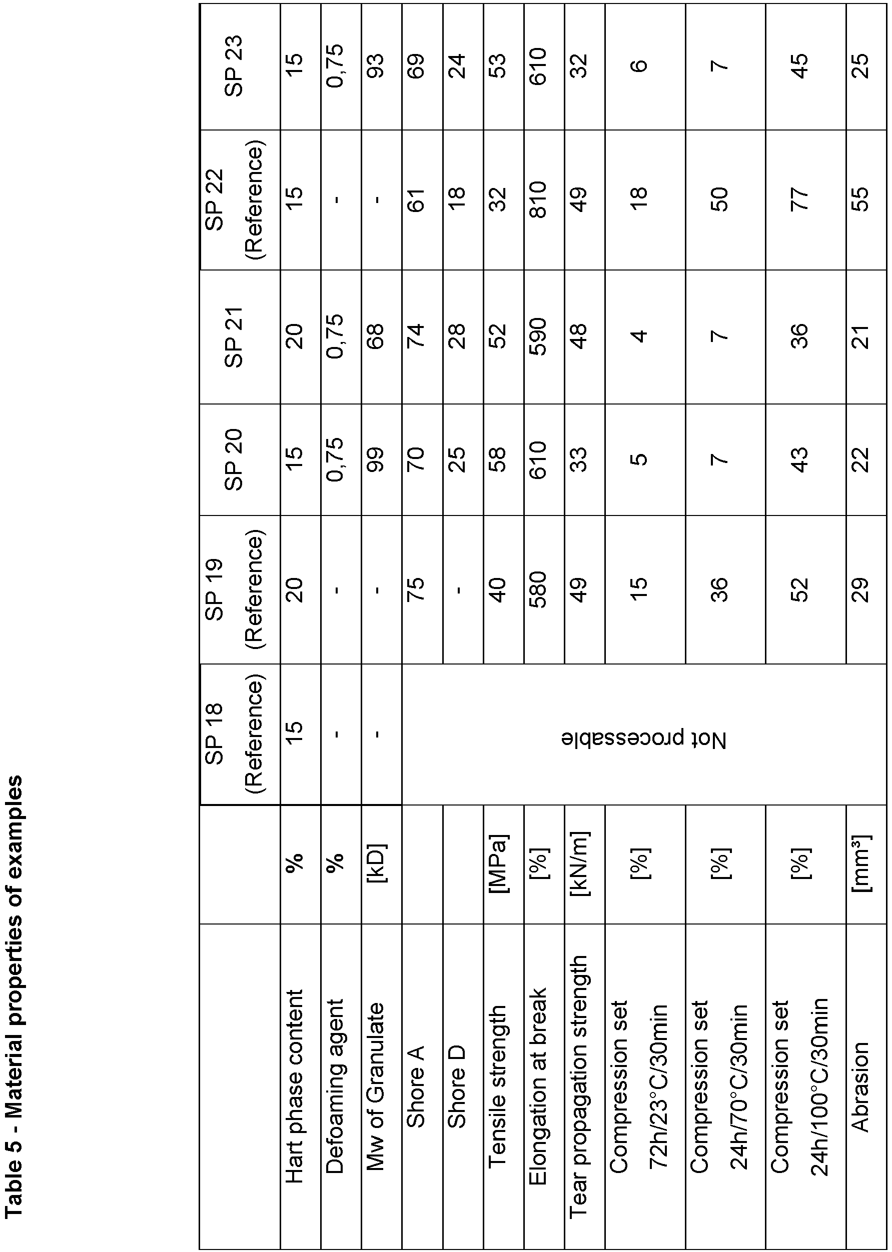

As can be taken from tables 3 to 5, the comparison of samples 1-3 to samples 4-8, of samples 18 -19 to samples 20-21, and of sample 22 to sample 23 underlines the differences of producibility and of mechanical properties of thermoplastic polyurethane based on butanediol and polyurea-urethane. Samples 4-13 indicate that polyurethane urea can be produced in a wide concentration range of water, independent from the concentration of the polyalphaolefin used as defoamer. The polyalphaolefin containing samples in Table 1 as well as samples 14-17 demonstrate the concentration range of the polyalphaolefin that is preferably used in the production process of polyurethane urea.

## Claims

1. A preparation comprising thermoplastic polyisocyanate polyaddition product (TPPP), wherein the thermoplastic polyisocyanate polyaddition product (TPPP) is obtained by reacting:
(a) a diisocyanate, and
(b) a compound reactive with isocyanate with a functionality between 1.8 and 2.6
(c) and water
in the presence of
(d) a defoamer, comprising a polyalphaolefin.

2. The preparation according to claim 1, wherein the thermoplastic polyisocyanate polyaddition product (TPPP) is a thermoplastic polyurethane-urea (TPU-U).

3. The preparation according to one of claim 1 to 2, wherein the product is obtained without chain extender.

4. The preparation according to one of claims 1 to 3, wherein the polyalphaolefin is the reaction product of an 1-alkene comprising 2 to 14 carbon atoms.

5. The preparation according to one of claims 1 to 4, wherein the polyalphaolefin is the reaction product of one of the 1-alkenes, selected from the group of 1-hexene, 1-octene, 1-decene, 1-dodecene, 1-tetradecene, or is a mixture thereof; preferably the 1-alkene is 1-decene.

6. The preparation according to one of claims 1 to 5, wherein the polyalphaolefin has 0.5 wt% to 3 wt% referring to the whole amount of the preparation.

7. The preparation according to one of claims 1 to 6, wherein the polyalphaolefin has a number average molecular weight from 4.0 × 10² g/Mol to 1.5× 10⁴ g/Mol, preferably weight from 2.0 ×10³ g/Mol to 2.4 × 10³ g/Mol, preferably determined according to DIN 55672-1: 2016-03.

8. The preparation according to one of claim 1 to 7, wherein the diisocyanate is an aromatic diisocyanate more preferably the diisocyanate is 2,2'-, 2,4'- and/or 4,4'-diphenylmethane diisocyanate (MDI).

9. A process for preparing a preparation according to one of claims 1 to 8.

10. The process according to claim 9, wherein the process is a reactive extrusion process, a belt line process, belt cast process, or a hand cast process, preferably a belt line process.

11. The process according to one of claims 9 or 10 comprising the following steps:
(A1) mixing the compound reactive towards isocyanate with the defoamer to obtain a pre-mixture, and
(A2) introducing the diisocyanate to the pre-mixture, preferably at a temperature in the range of ≥ 50°C to ≤ 150°C to obtain a reaction mixture.
or
mixing all reaction components simultaneously.

12. Use of the preparation according to one of claims 1 to 8 or as obtained according to one of claims 9 to 11 for producing an article.

13. An article comprising the preparation according to one of claims 1 to 8 or as obtained according to one of claims 9 to 11.

14. Foam bead or article made of the preparation according to one of claims 1 to 8 or as obtained according to one of claims 9 to 11.

## Patentansprüche

1. Zubereitung, umfassend ein thermoplastisches Polyisocyanat-Polyadditionsprodukt (TPPP), wobei das thermoplastische Polyisocyanat-Polyadditionsprodukt (TPPP) erhalten wird durch Umsetzen von:
(a) einem Diisocyanat und
(b) einer gegenüber Isocyanat reaktiven Verbindung mit einer Funktionalität zwischen 1,8 und 2,6
(c) und Wasser
in Gegenwart von
(d) einem Entschäumer, der ein Polyalphaolefin umfasst.

2. Zubereitung nach Anspruch 1, wobei es sich bei dem thermoplastischen Polyisocyanat-Polyadditionsprodukt (TPPP) um einen thermoplastischen Polyurethanharnstoff (TPU-U) handelt.

3. Zubereitung nach einem der Ansprüche 1 bis 2, wobei das Produkt ohne Kettenverlängerungsmittel erhalten wird.

4. Zubereitung nach einem der Ansprüche 1 bis 3, wobei es sich bei dem Polyalphaolefin um das Umsetzungsprodukt eines 1-Alkens mit 2 bis 14 Kohlenstoffatomen handelt.

5. Zubereitung nach einem der Ansprüche 1 bis 4, wobei es sich bei dem Polyalphaolefin um das Reaktionsprodukt von einem der 1-Alkene aus der Gruppe bestehend aus 1-Hexen, 1-Octen, 1-Decen, 1-Dodecen, 1-Tetradecen oder eine Mischung davon handelt und es sich bei dem 1-Alken bevorzugt um 1-Decen handelt.

6. Zubereitung nach einem der Ansprüche 1 bis 5, wobei das Polyalphaolefin 0,5 Gew.-% bis 3 Gew.-%, bezogen auf die Gesamtmenge der Zubereitung, ausmacht.

7. Zubereitung nach einem der Ansprüche 1 bis 6, wobei das Polyalphaolefin ein zahlenmittleres Molekulargewicht von 4,0 × 10² g/mol bis 1,5 × 10⁴ g/mol, vorzugsweise von 2,0 × 10³ g/mol bis 2,4 × 10³ g/mol, vorzugsweise bestimmt gemäß DIN 55672-1: 2016-03, aufweist.

8. Zubereitung nach einem der Ansprüche 1 bis 7, wobei es sich bei dem Diisocyanat um ein aromatisches Diisocyanat handelt und es sich weiter bevorzugt bei dem Diisocyanat um 2,2'-, 2,4'- und/oder 4,4'-Diphenylmethandiisocyanat (MDI) handelt.

9. Verfahren zur Herstellung einer Zubereitung nach einem der Ansprüche 1 bis 8.

10. Verfahren nach Anspruch 9, wobei es sich bei dem Verfahren um ein Reaktivextrusionsverfahren, ein Bandstraßenverfahren, ein Bandgießverfahren oder ein Handgießverfahren, vorzugsweise ein Bandstraßenverfahren, handelt.

11. Verfahren nach Anspruch 9 oder 10, das die folgenden Schritte umfasst:
(A1) Mischen der gegenüber Isocyanat reaktiven Verbindung mit dem Entschäumer unter Erhalt einer Vormischung und
(A2) Eintragen des Diisocyanats in die Vormischung, vorzugsweise bei einer Temperatur im Bereich von ≥ 50 °C bis ≤ 150 °C, unter Erhalt einer Reaktionsmischung
oder
gleichzeitiges Mischen aller Reaktionskomponenten.

12. Verwendung der Zubereitung nach einem der Ansprüche 1 bis 8 oder der gemäß einem der Ansprüche 9 bis 11 erhaltenen Zubereitung zur Herstellung eines Gegenstands.

13. Gegenstand, umfassend die Zubereitung nach einem der Ansprüche 1 bis 8 oder die gemäß einem der Ansprüche 9 bis 11 erhaltene Zubereitung.

14. Schaumperle oder Gegenstand, hergestellt aus der Zubereitung nach einem der Ansprüche 1 bis 8 oder der gemäß einem der Ansprüche 9 bis 11 erhaltenen Zubereitung.

## Revendications

1. Préparation comprenant un produit de polyaddition de polyisocyanate thermoplastique (TPPP), le produit de polyaddition de polyisocyanate thermoplastique (TPPP) étant obtenu par mise en réaction :
(a) d'un diisocyanate, et
(b) d'un composé réactif avec un isocyanate comportant une fonctionnalité comprise entre 1,8 et 2,6
(c) et de l'eau
en la présence de
(d) un antimousse, comprenant une polyalphaoléfine.

2. Préparation selon la revendication 1, le produit de polyaddition de polyisocyanate thermoplastique (TPPP) étant une polyuréthane-urée thermoplastique (TPU-U).

3. Préparation selon l'une parmi les revendications 1 à 2, le produit étant obtenu sans extenseur de chaînes.

4. Préparation selon l'une parmi les revendications 1 à 3, la polyalphaoléfine étant le produit de réaction d'un 1-alcène comprenant 2 à 14 atomes de carbone.

5. Préparation selon l'une parmi les revendications 1 à 4, la polyalphaoléfine étant le produit de réaction de l'un des 1-alcène, choisis dans le groupe composé par le 1-hexène, 1-octène, 1-décène, 1-dodécène, 1-tétradécène, ou étant un mélange correspondant ; préférablement le 1-alcène étant le 1-décène.

6. Préparation selon l'une parmi les revendications 1 à 5, la polyalphaoléfine représentant 0,5 % en poids à 3 % en poids par rapport à la quantité totale de la préparation.

7. Préparation selon l'une parmi la revendication 1 à 6, la polyalphaoléfine ayant un poids moléculaire moyen en nombre de 4,0 × 10² g/mole à 1,5 × 10⁴ g/mole, préférablement un poids de 2,0 × 10³ g/mole à 2,4 × 10³ g/mole, préférablement déterminé selon la norme DIN 55672-1:2016-03.

8. Préparation selon l'une parmi les revendications 1 à 7, le diisocyanate étant un diisocyanate aromatique, plus préférablement le diisocyanate étant le 2,2'-diisocyanate de diphénylméthane, le 2,4'-diisocyanate de diphénylméthane et/ou le 4,4'-diisocyanate de diphénylméthane (MDI).

9. Procédé pour la préparation d'une préparation selon l'une des revendications 1 à 8.

10. Procédé selon la revendication 9, le procédé étant un procédé d'extrusion réactive, un procédé de ligne de courroie, un procédé de coulée de courroie, ou un procédé de coulée manuelle, préférablement un procédé de ligne de courroie.

11. Procédé selon l'une des revendications 9 et 10 comprenant les étapes suivantes :
(A1) mélange du composé réactif envers un isocyanate avec l'antimousse pour obtenir un prémélange, et
(A2) introduction du diisocyanate dans le prémélange, préférablement à une température dans la plage de ≥ 50 °C à ≤ 150 °C pour obtenir un mélange réactionnel,
ou mélange de tous les composants de réaction simultanément.

12. Utilisation de la préparation selon l'une des revendications 1 à 8 ou telle qu'obtenue selon l'une des revendications 9 à 11 pour la production d'un article.

13. Article comprenant la préparation selon l'une des revendications 1 à 8 ou telle qu'obtenue selon l'une des revendications 9 à 11.

14. Bille ou article de mousse composé(e) de la préparation selon l'une des revendications 1 à 8 ou telle qu'obtenue selon l'une des revendications 9 à 11.
